# EUROPEAN PATENT SPECIFICATION

(11) **EP 0 583 709 B1**
(45) Date of publication and mention of the grant of the patent: **06.05.1999**
(21) Application number: 93112678.3
(22) Date of filing: 07.08.1993
(51) Int. Cl.: G06K 19/10, G07F 7/08

(54) **Unforgeable identification device, identification device reader and method of identification**
Nichtfälschbare Identifizierungseinrichtung, Leser und Identifizierungsverfahren
Dispositif d'identification infalsifiable , lecteur et méthode d'identification

(30) Priority: 17.08.1992 EP 92402297
(43) Date of publication of application: 23.02.1994
(73) Proprietor: THOMSON multimedia, 92648 Boulogne Cédex (FR)
(72) Inventor: Naccache, David, F-94700 Maisons-Alfort (FR); Fremanteau, Patrice, F-67100 Strasbourg (FR)
(74) Representative: Hartnack, Wolfgang, Dipl.-Ing.

(56) References cited:
- EP-A- 0 161 181
- EP-A- 0 252 499
- EP-A- 0 298 156
- EP-A- 0 451 024
- US-A- 4 094 462
- US-A- 4 527 051

## Description

The invention relates to an unforgeable identification device, identification device reader and to a method of identification.

### Background

Different kind of plastic cards are known. Memory cards are cheap and contain memory means, but can be forged and duplicated easily. Smart-cards contain also a microprocessor and can be used for cryptographic purposes, e.g. in pay TV applications and banking, but are much more expensive. US-A-4 094 462 discloses an unforgeable credit card including a diffraction grating stripe which has a distribution which can be represented by a unique number, wherein the diffraction grating cannot be controlled under production of said card but can be evaluated in a card reader. The card further contains a memory stripe for storing a customer number which is combined with said unique number to form a security information.

### Invention

A device according to the preamble of claim 1 is known from US-A-4 094 462.

It is one object of the invention to disclose a cheap and unforgeable memory card. This object is achieved by the identification device disclosed in claim 1.

The inventive memory card is characterised in that once issued by an authority, the card is nearly impossible to copy and duplicate. This new memory card has significant cost advantages over microprocessor-based smart-cards.
The process of fabrication of the new cards differs from that of standard cards in that small metal or ferrite particles (eg. steel marbles) are mixed with the plastic paste from which the plastic support of the card is to be produced.
Each resulting card will therefore contain a different random distribution pattern of particles. This random distribution of the particles is assumed to be impossible to control or influence during the process of fabrication.

A reader of the identification device is defined in claim 4.

The reader is provided with magnetic inductance detectors (reader) that allow to read the distribution of particles as a number p and with a chip reader for reading the card's memory means.
In order to personalize a card, the issuing authority does the following :
1. Establish the identity details ID of the card's owner;
2. Pick a card and read it's random pattern p;
3. Compute s = SIG(ID,p);
4. Record s and ID in the memory means of the card;
5. Give the card to the user.
Here "SIG" stands for any secure public key digital signature scheme. The memory means are electronically protected.

When a memory card is inserted into a verification reader, the reader will scan it and convert the random distribution of particles into the number p. Next, the verification reader will read s and ID from the card's memory means and will check that s is actually the signature of {ID,p} by performing SIG⁻¹.

An identification system consisting of an identification device and a reader is disclosed in claim 6.

A method of identification which utilizes the inventive identification device and reader is defined in claim 8.

### Drawings

Preferred embodiments of the invention are described with reference to the accompanying drawings, which show in:
Fig. 1 structure of an inventive memory card;
Fig. 2 structure of an inventive reader for the memory card.

### Preferred embodiments

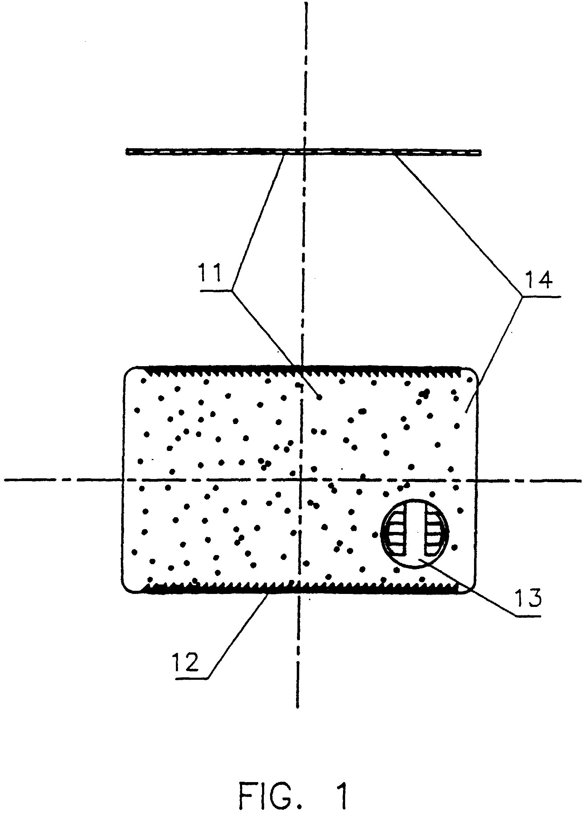

In Fig. 1 buried ferrite particles 11 are distributed within the plastic support 14 of a memory card with standardized shape. This card contains a chip 13 with which data can be exchanged in a respective reader, e.g. contactless. At two sides of the card electronic scanner synchronisation marks 12 are arranged.

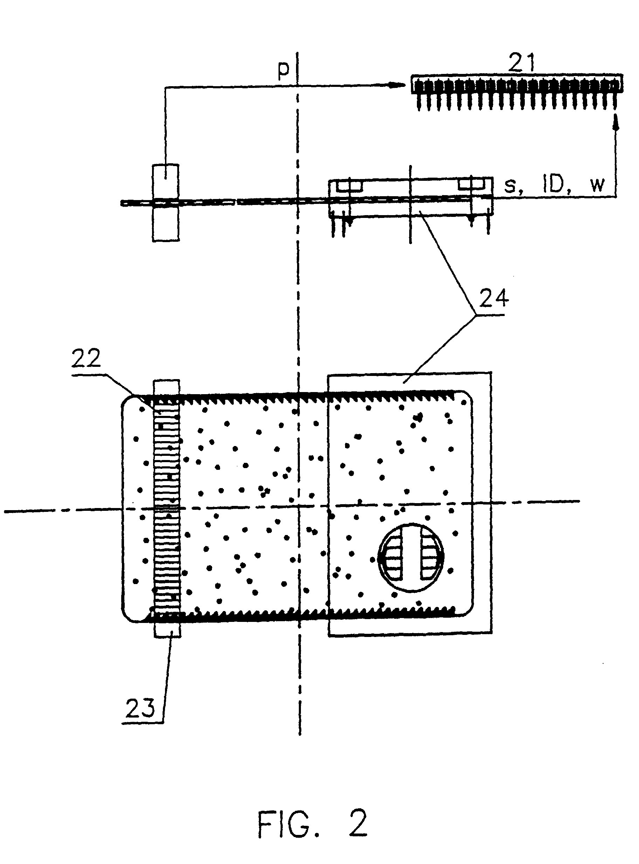

In Fig. 2 the card is inserted in a reader (scanner). The reader includes electromagnetic scanning cells 22 for generating the distribution value p, e.g. an optical scanning synchronization head 23 and reading means (smart-card chip reader) 24 for at least the identity data ID and data s stored in the memory of the chip 13. ID, s, the distribution value p and possibly the password w are evaluated in a microprocessor 21 which can be a part of the reader device.

One example of digital signature schemes is Rabin's signature scheme where n is an RSA modulus and s is defined by s = SIG(m) = m^{1/2} mod n. The corresponding verification is done by checking that s² mod n = m.

Optionally, one can improve the basic scheme by including also a user's password w. In such a case, the process of issuing a card and verifying it's validity becomes :
1. Establish the identity details ID of the card's owner.
2. Pick a card and read it's random pattern p.
3. Decide about a password w specific to the user.
4. Compute s = SIG(ID,p,w)
5. Record s and ID in the memory means of the card.
6. Give the card and w to the user.
For verifying the validity of this card, the verification reader will proceed as before but will request from the user to key-in w.

The SIG scheme can be one of the following or respective methods:
- Rabin's digital signature;
- RSA algorithm, Rivest, Shamir, Adelman, "A method for obtaining digital signatures and public-key cryptosystems", Communications of the ACM, Vol 21, No 2, pp 120-126, 1978);
- Data Signature Standard (DSS);
- El Gamal, "A public-key cryptosystem and a signature scheme based on the discrete logarithm", IEEE Transactions on Information Theory, vol. 31, No. 4, pp. 469-472, 1985;
- Fiat, Feige and Shamir, "Zero-Knowledge Proofs of Identity", Journal of Cryptology, vol 1, pp. 77-94. See also EP-A-0252499 and EP-A-0325238.

For synchronizing the scanning of the ferrite particles (whatever the insertion speed of the card is), the card can be marked, e.g. at the boundaries, by a sequence of mechanical (embossed or holes) or optical marks. The marks are preferably detected optically by the reader and trigger the scanning of plastic band by band. The marks can also be based on electromagnetic detection techniques and the triggering of the scanning is done accordingly.

Instead of a card any other kind of device or shape can be used, whereby the reader is adapted respectively.

Identification shall also mean authentication.

## Claims

1. Unforgeable plastic device including an area (14) in which detectable elements (11) have a distribution which can be represented by a value p, wherein said distribution cannot be controlled under production of said plastic device but can be evaluated in reader means (22), the device containing a memory chip (13) for storing at least identity data (ID) and data s = SIG(ID, p) corresponding to a digital signature scheme SIG which is a function of the identity data (ID) and p, **characterised** by:
- said detectable elements are magnetic particles (11), in particular steel or ferrite pellets, having a random distribution and being buried in and mixed with the plastic of the device;
- the digital signature scheme is public-key digital signature scheme;
- the memory means are of the type electronically protected.

2. Device according to claim 1, wherein said scheme is further a function of a user-specific password.

3. Device according to claim 1 or 2, which is marked (12) for scanning control, e.g. scanning speed and/or synchronisation, using a sequence of embossed marks or holes or optical marks.

4. Identification device verification reader for an identification device according to any of claims 1 to 3, including detector means (22) for scanning said elements (11) in order to determine the value p, and including reading means (24) for reading at least said identity data (ID) and data s from the memory means of said identification device, **characterised** in that said detector means (22) is in particular a magnetic inductance reader, and that the verification reader checks whether s is actually the signature of {ID,p} by performing the inverse public-key digital signature scheme SIG⁻¹.

5. Reader according to claim 4, including means (23) for evaluating said scanning control marks (12).

6. Identification system, including an identification device according to any of claims 1 to 3 and an identification device verification reader according to claim 4 or 5.

7. Method of identification using an identification device according to any of claims 1 to 3 and an identification device verification reader according to claim 4 or 5, including the following identification device issuing steps:
- collecting identity details ID of a user;
- reading p and computing s = SIG(ID, p), where SIG is a public-key digital signature scheme function;
- storing s and ID in memory means (in 13) of said identification device,
and including the following identification steps:
- reading the identification device using an identification device verification reader, whereby value p is generated (22) and at least s and ID are read from said memory means (in 13);
- checking that s is actually the signature of ID and p concatenated by performing (21) the respective inverse public-key digital signature scheme function SIG⁻¹.

8. Method according to claim 7, wherein in the issuing steps said public-key digital signature scheme s = SIG(ID, p, w) includes a password w specific to said user and that in the identification steps the user enters said password w, whereafter it is checked that s is actually the signature of ID, p and w concatenated.

9. Method according to claim 7 or 8, wherein the reading of said identification device is synchronised using scanning control marks (12).

## Patentansprüche

1. Nichtfälschbare Plastikeinrichtung mit einem Bereich (14), in dem detektierbare Elemente (11) eine durch einen Wert p darstellbare Verteilung aufweisen, wobei die Verteilung bei der Herstellung der Plastikeinrichtung nicht gesteuert, jedoch in Lesemitteln (22) ausgewertet werden kann und die Einrichtung einen Speicher-Chip (13) enthält zum Speichern von wenigstens Identitätsdaten (ID) und Daten s = SIG (ID,p), die einem digitalen Unterschriftsschema SIG entsprechen, das eine Funktion der Identitätsdaten (ID) und p ist, gekennzeichnet durch folgende Merkmale:
- die detektierbaren Elemente sind magnetische Partikel (11), insbesondere Stahl- oder Ferrit-Kügelchen, die eine Zufallsverteilung aufweisen und in das Plastikmaterial der Einrichtung eingebettet und mit diesem vermischt sind,
- das digitale Unterschriftsschema ist ein digitales Unterschriftsschema mit öffentlichem Schlüssel,
- die Speichermittel bestehen aus einem elektronisch geschützten Typ.

2. Einrichtung nach Anspruch 1, wobei das Schema außerdem eine Funktion eines Benutzer-spezifischen Kennworts ist.

3. Einrichtung nach Anspruch 1 oder 2, die unter Verwendung einer Folge von geprägten Markierungen oder Löchern oder optischen Marken für eine Steuerung der Abtastung, zum Beispiel der Abtastgeschwindigkeit und/oder der Synchronisierung, markiert ist (12).

4. Identifizierungseinrichtungs-Prüfleser für eine Identifiziereinrichtung nach einem der Ansprüche 1 bis 3 mit Detektormitteln (22) zum Abtasten der Elemente (11) zur Bestimmung des Wertes p und mit Lesemitteln (24) zum Lesen wenigstens der Identitätsdaten (ID) und der Daten s aus den Speichermitteln der Identifizierungseinrichtung, dadurch gekennzeichnet, daß die Detektormittel (22) insbesondere ein Leser für eine magnetische Induktanz sind und der Prüfleser prüft, ob s wirklich die Unterschrift von {ID, p} ist, indem er das inverse digitale Unterschriftsschema SIG⁻¹ mit einem öffentlichen Schlüssel bildet.

5. Leser nach Anspruch 4, enthaltend Mittel (23) zum Auswerten der Markierungen (12) für die Steuerung der Abtastung.

6. Identifizierungssystem mit einer Identifizierungseinrichtung nach einem der Ansprüche 1 bis 3 und einem Prüfleser für die Identifizierungseinrichtung nach Anspruch 4 oder 5.

7. Verfahren zur Identifizierung unter Verwendung einer Identifizierungseinrichtung nach einem der Ansprüche 1 bis 3 und eines Prüflesers für die Identifizierungseinrichtung nach Anspruch 4 oder 5 mit den folgenden Schritten durch die Identifizierungseinrichtung:
- Sammeln der Identitätsdetails ID eines Benutzers,
- Lesen von p und Berechnen von s = SIG (ID, p), wobei SIG eine digitale Unterschrifts-Funktion mit öffentlichem Schlüssel ist,
- Speichern von s und ID in Speichermitteln (in 13) der Identifizierungseinrichtung, und mit den folgenden Identifizierungsschritten:
- Lesen der Identifizierungseinrichtung unter Verwendung eines Prüflesers für die Identifizierungseinrichtung, wodurch der Wert p erzeugt wird (22) und wenigstens s und ID aus den Speichermitteln (in 13) gelesen werden,
- Prüfen, ob s wirklich die aus ID und p verknüpfte Unterschrift ist, indem die entsprechende inverse Unterschriftsschema-Funktion SIG⁻¹ mit öffentlichem Schlüssel gebildet wird (21).

8. Verfahren nach Anspruch 7, wobei in den Ausgabeschritten das digitale Unterschriftsschema mit öffentlichem Schlüssel s = SIG (ID, p, w) ein für den Benutzer spezifisches Kennwort enthält und daß der Benutzer in den Identifizierungsschritten das Kennwort w eingibt, wonach geprüft wird, ob s wirklich die aus ID, p und w verknüpfte Unterschrift ist.

9. Verfahren nach Anspruch 7 oder 8, wobei das Lesen der Identifizierungseinrichtung durch Anwendung von Steuermarkierungen (12) für die Abtastung synchronisiert ist.

## Revendications

1. Un dispositif plastique infalsifiable comportant une surface (14) dans laquelle des éléments détectables (11) ont une distribution qui peut être représentée par une valeur p, dans laquelle ladite distribution ne peut pas être contrôlée lors de la production du dispositif plastique mais peut être évaluée dans un dispositif de lecture (22), le dispositif contenant une puce à mémoire (13) pour stocker au moins une donnée-identité (ID) et des données s = SIG(ID, p) correspondant à un schéma de signature numérique SIG qui est une fonction de la donnée-identité (ID) et p, caractérisé par :
- lesdits éléments détectables sont des particules magnétiques (11), en particulier des billes d'acier ou de ferrite, ayant une distribution aléatoire et étant enterrées et mélangées avec le plastique du dispositif;
- le schéma de signature numérique est un schéma de signature numérique à clé publique ;
- les moyens-mémoire sont du type protégé électroniquement.

2. Dispositif selon la revendication 1, dans lequel ledit schéma a de plus une fonction de mot de passe spécifique à l'utilisateur.

3. Dispositif selon l'une quelconque des revendications 1 et 2, qui est marqué (12) pour commander le balayage, par exemple la vitesse de balayage et/ou la synchronisation, en utilisant une séquence de marques en relief ou de trous ou de marques optiques.

4. Lecteur de vérification du dispositif d'identification pour un dispositif d'identification selon l'une des revendications 1 à 3 comportant des moyens de détection (22) pour le balayage desdits éléments (11) afin de déterminer la valeur p, et incluant un moyen de lecture (24) pour lire au moins lesdites données-identité (ID) et données s provenant du moyen-mémoire dudit dispositif d'identification, caractérisé en ce que le moyen de détection (22) est en particulier un lecteur d'inductance magnétique, et en ce que le lecteur de vérification vérifie si s est actuellement la signature de (ID,p) en effectuant le schéma de signature numérique à dé publique inverse SIG⁻¹.

5. Lecteur selon la revendication 4, incluant des moyens (23) pour évaluer lesdites marques de contrôle de balayage (12).

6. Système d'identification comportant un dispositif d'identifi-cation selon l'une quelconque des revendications 1 à 3 et un lecteur de vérification du dispositif d'identification selon les revendications 4 ou 5.

7. Procédé d'identification utilisant un dispositif d'identification selon l'une quelconque des revendications 1 à 3 et un lecteur de vérification du dispositif d'identification selon les revendications 4 ou 5, incluant le dispositif d'identification suivant, réalisant les étapes :
- de collecter des détails d'identité ID d'un utilisateur ;
- de lire p et calculer s - SIG (ID, p), où SIG est une fonction d'un schéma de signature numérique à clé publique;
- de stocker s et ID dans des moyens-mémoire (en 13) dudit dispositif d'identification,
et incluant les étapes d'identification suivantes :
- lire le dispositif d'identification en utilisant un lecteur de vérification du dispositif d'identification, ce par quoi la valeur p est générée (22) et au moins s et ID sont lus à partir dudit moyen-mémoire (en 13) ;
- vérifier que s est actuellement la signature d'lD et p concaténée en effectuant (21) la fonction respective du schéma de signature numérique à clé publique inverse SIG⁻¹.

8. Procédé selon la revendication 7 dans lequel dans les étapes d'émission, ledit schéma de signature numérique à clé publique s = SIG (ID, p, w) comporte un mot de passe w spécifique à l'utilisateur et en ce que dans les étapes d'identification, l'utilisateur entre ledit mot de passe w, ce par quoi on vérifie que s est actuellement la signature de ID, p et w concaténée.

9. Méthode selon la revendication 7 ou 8, dans laquelle la lecture dudit dispositif d'identification est synchronisée en utilisant des marques de contrôle du balayage (12).
